Europäisches Patentamt

European Patent Office

Office européen des brevets

(11) Publication number: **0 317 827**
**A2**

## EUROPEAN PATENT APPLICATION

(21) Application number: 88118676.1

(22) Date of filing: 09.11.88

(51) Int. Cl.⁴: **G06F  11/16**

(30) Priority: **23.11.87 US 123699**

(43) Date of publication of application:
**31.05.89 Bulletin  89/22**

(84) Designated Contracting States:
**CH DE ES FR GB IT LI**

(71) Applicant: **Siemens Aktiengesellschaft Berlin und München**
**Wittelsbacherplatz 2**
**D-8000 München 2(DE)**

(72) Inventor: **Honeck, Karl-Heinz**
**Spanierstrasse 50**
**D-6741 Essingen(DE)**
Inventor: **Neugebauer, Manfred**
**In der Reuth 132**
**D-8520 Erlangen(DE)**

(54) Computer system with logical monitcring for secure processing of system support signals.

(57) A high reliability computer system comprising a system bus arrangement, an arrangement of processor modules in a MASTER/CHECKER pair located on said computer card and connected to said system bus arrangement, a power supply module supplying power to the computer system, said power supply module arrangement connecting to the computer system through a plurality of interconnecting lines, logic circuitry connected to said plurality of interconnecting lines for processing a plurality of system support signals transmitted by said power supply arrangement to the computer systems, to insure the integrity of said system support signals, and a interrupt signal line as part of said interconnecting lines.

FIG 1

# COMPUTER SYSTEM WITH LOGICAL MONITORING FOR SECURE PROCESSING OF SYSTEM SUPPORT SIGNALS

Field of the Invention

This invention relates to electronic data processing systems and more particularly to redundant electronic computer systems with monitoring for secure processing of system support signals.

Background of the Invention

For the operation of high-availability computer systems, to insure NON-STOP or reliable operation, it is necessary to at least duplicate all active computing components as well as the system support cards and the necessary interconnecting lines. In this connection it is necessary that the system support signals that are also duplicated, e.g., start, stop, INIT and interrupt; be checked for the possibility of false alarm. For example, if the power supply fails, interrupt signals are sent to the computer cards in order the achieve a well-defined stop condition in the processing of data without the complete loss of data present in the system. However, as a result of differences in delay time these interrupts may arrive at different times and thus yield contradictory information.

Also, when the system is started, it is also necessary to evaluate correctly the initialization signals coming from the power supply modules in such a manner to ascertain that both power supply modules are functioning properly, even through operation will initially be carried on with one of the power supply modules.

Summary of the Invention

It is an object of this invention to create a computer system with logical monitoring for the secure processing of system support signals, such as start, stop and interrupt, wherein the system support signals, which are transmitted over separate interconnecting lines in the computer system, can influence the system only under well-defined preconditions.

Briefly stated in accordance with one aspect of the invention the aforementioned objects are achieved by providing a high reliable computer system comprising a system bus arrangement, an arrangement of processor modules in a MASTER / CHECKER pair located on said computer card and connected to said system bus arrangement, a power supply module supplying power to the computer system, said power supply module arrangement connecting to the computer system through a plurality of interconnecting lines, logic circuitry connected to said plurality of interconnecting lines for processing a plurality of system support signals transmitted by said power supply arrangement to the computer systems, to insure the integrity of said system support signals, and a interrupt signal line as part of said interconnecting lines.

Briefly stated in accordance with a further aspect of the invention the aforementioned objects are achieved by providing a redundant computer system including a redundant system bus arrangement of two essentially identical system buses, a redundant arrangement of processor modules in two essentially identical MASTER / CHECKER pairs located on said computer card and connected to the redundant system bus arrangement and the redundant module bus arrangement, a redundant power supply module arrangement of two essentially identical power supply modules supplying power to the computer system, the redundant power supply module arrangement connecting to the computer system through a plurality of redundant interconnecting lines, and logic circuitry connected to the plurality of interconnecting lines for processing a plurality of system support signals transmitted by the redundant power supply arrangement to the computer system, to insure the integrity of said system support signals.

This arrangement in accordance with the invention insures that the system support signals are, in an advantageous manner, first either buffered by being placed in temporary storage in the case of an interrupt, or checked for plausibility or integrity in the case of INIT. In the case of buffering of the interrupt signal, it is made certain that data processing in each of the processor modules, which operate in parallel, is stopped in the same well-defined stop condition, since a repetition cannot take place until the next system clock pulse.

## Brief Description of the Drawings

While the specification concludes with claims particularly pointing out and distinctly claiming the subject matter which is regarded as the invention, it is believed that the invention will be better understood from the following description of the preferred embodiment taken in conjunction with the accompanying drawings in which:

Figure 1 shows a simplified functional block diagram of an embodiment of a computer system;

Figure 2 shows a circuit diagram relating to the signal lines for interrupt and failure signals and a register for a redundant computer system; and

Figure 3 shows a nonredundant version of the diagram shown in Figure 2.

## Description of a Preferred Embodiment

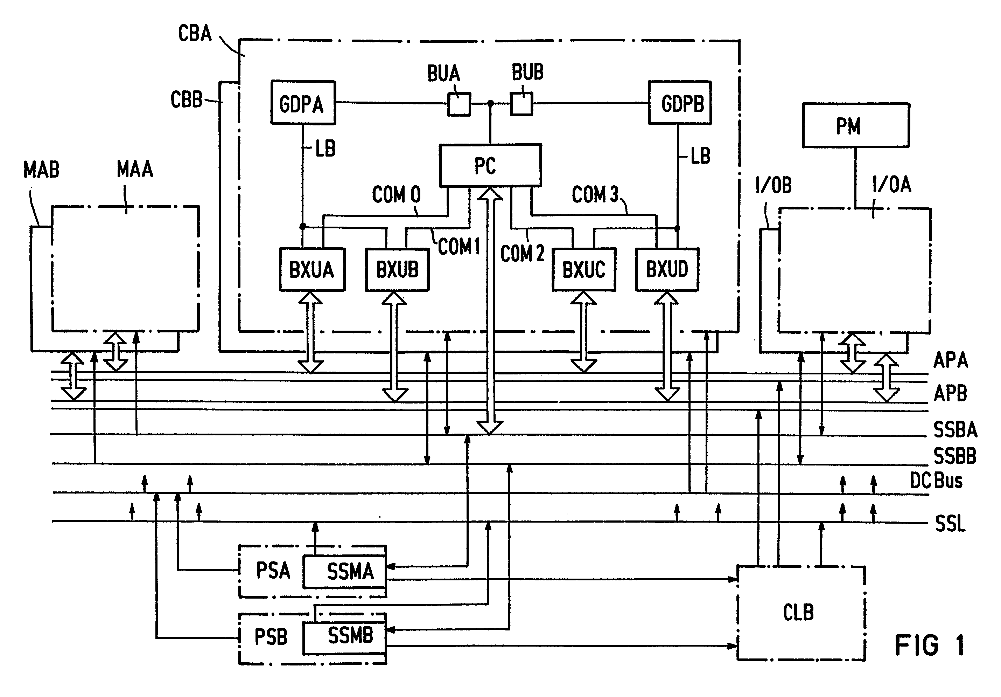

Figure 1 illustrates a computer system with function blocks representing a computer card, i.e., computational board CBA and CBB, on which there are two processor modules, general data processors GDPA and GDPB. Like most of the computer modules mentioned in what follows, the processor modules are VLSI components. The two processor modules GDPA and GDPB form a logical general data processor. One of the modules, under hardware or software control, is assigned the Master function and the other module the subordinate Checker function. In the present preferred circuit, the processor module GDPA is connected, via a local bus LB, to bus extension units BXUA and BXUB, and the processor module GDPB is connected, via a local bus LB, to bus extension units BXUC and BXUD. Each of the bus extension units BXUA and BXUC are connected to a system bus APA and each of the bus extension units BXUB and BXUD are connected to a further system bus APB. In a nonredundant bus version (not shown) only one AP bus is connected via a BXU module to the processors.

In a further function block, not shown in more detail, memory arrays MAA and MAB are connected to the system buses APA and APB.

The bus extension units BXUA and BXUB are, furthermore, each connected via a communications line COM0 and COM1 to a parameter controller PC, and the bus extension units BXUC and BXUD are each connected via a communications line COM2 and COM3 to the said parameter controller PC. The parameter controller may be, for example, the Intel 8051 microprocessor. At further inputs of the parameter controller PC, certain parameters of the computer card can be set from outside by means of analog or digital setting means as well as by means of stored data. The parameter controller is connected, via a buffer BUA, to the local bus LB of the first pair of processor modules GDPA and GDPB which are predefined as a Master pair and, via a buffer BUB, to the local bus LBB of the second processor modules GDPB.

Also in Figure 1, on the right-hand side, there are function blocks representing the input-output module I/OA and I/OB of the computer system described here, the circuitry not being treated in detail at this point. This I/O modules accomplishes the connection of the computer system to peripherals PM by means of well-defined communications protocols, e.g., LAN, etc.

Figure 1 further shows two serial system support buses SSBA and SSBB and a set of support signal lines SSL. The parameter controllers PC of the computer cards are connected to either SSBA or SSBB: Redundant embodiments of each of the computer cards (e. g., processor means, memory means, input/output means) and the power supply modules are connected to separate serial system support buses.

The bottom part of Figure 1 shows an overall plan of two power supply modules PSA and PSB, both of essentially the same design. In addition to the DC power supply connections, the power supply modules PSA and PSB exhibit two system support modules SSMA and SSMB, each of which is provided with a microprocessor, e.g., an Intel 8051. Outputs of the system support modules SSMA and SSMB are connected to the system support buses SSBA and SSBB respectively.

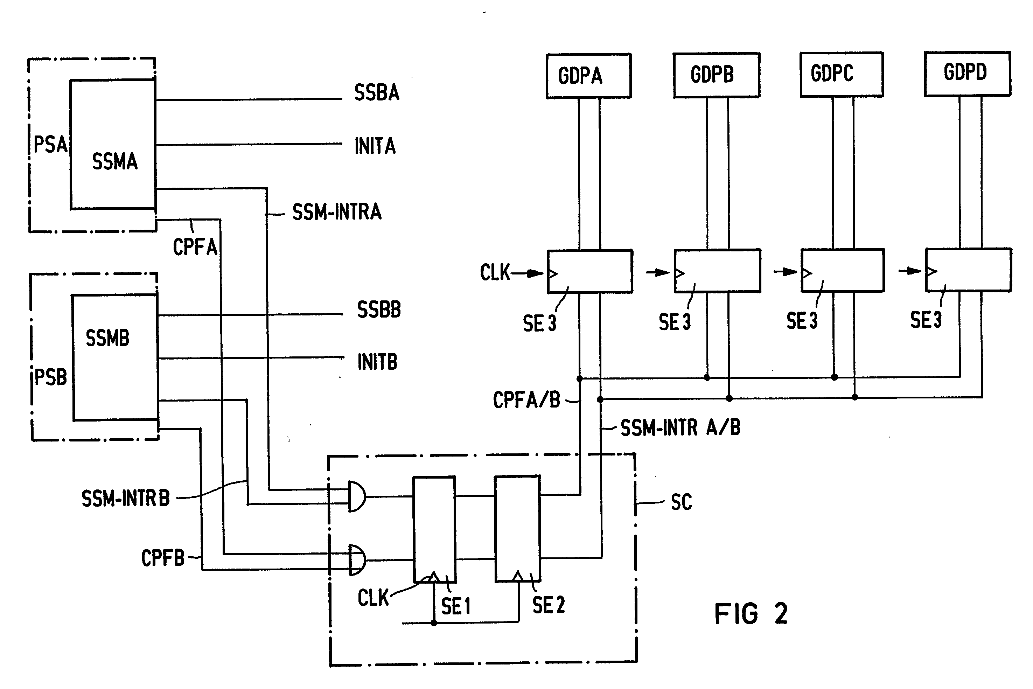

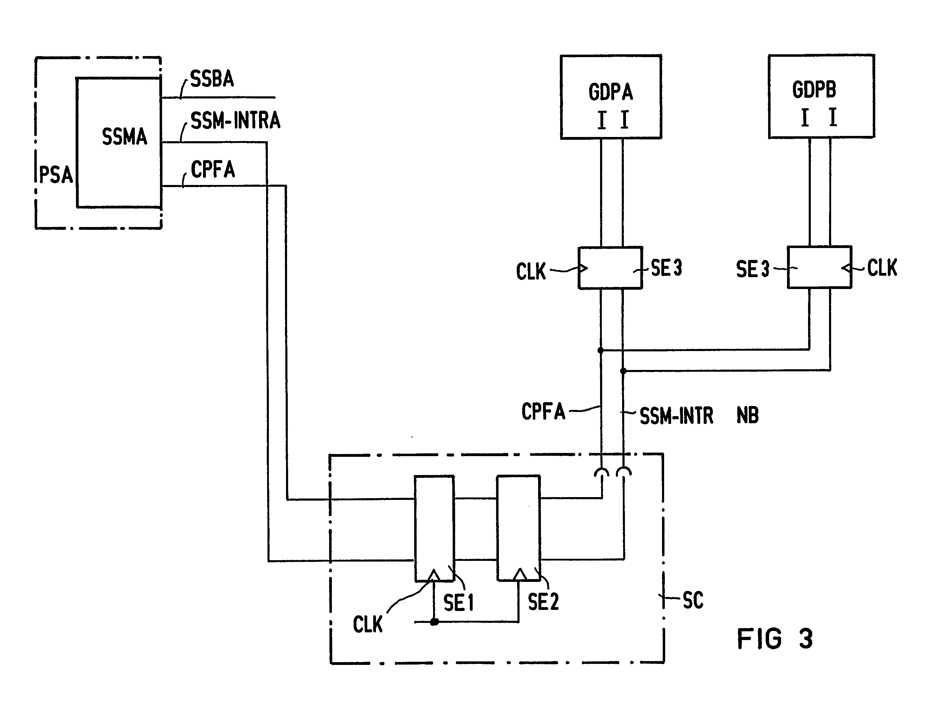

The support signal lines SSL and their interconnections with the system and the power supply modules PSA/PSB are illustrated in figure 2 and 3 in more detail. The embodiment illustrated in Figure 2 contains four general data processors GDPA, GDPB, GDPC, GDPD in a fully redundant version. The embodiment illustrated in Figure 3 contains only two general data processors GDPA and GDPB and one power supply PSA. In this nonredundant computer configuration where only a MASTER / CHECKER system is present the same principles as described in Figure 2 may be used.

The interconnecting line SSM-INTRA/SSM-INTRB allows a system interrupt signal to be emitted; this action can be induced, for example, by pressing an appropriate button on the system control panel. This signal causes the processor modules to start the system monitor program, for example for test functions, without resetting.

Over the interconnecting line CPFA/CPFB, the system is notified of an interruption in the AC line power inputs to the power supply module PSA/PSB. For example, a LOW signal can be used to indicate that the system will fail preferably after 2 milliseconds.

After the system is switched on, i.e., cold start, or just part of the system is restarted, i.e., a warm start, initialization of all components under software or hardware control is carried out first during an INIT signal issued by the system support modules SSMA/SSMB. There follows an identification phase, during which the identities of the VLSI components are established. Next, in the parameter loading phase, parameters are loaded into the appropriate registers of the VLSI components, preferably by means of the parameter controller PC, which is discribed in our Patent file "Arrangement for Loading the Parameters Into Active Modules in a Computer System" (our Dockel Number VPA 85 E 7421) assigned to Siemens Aktiengesellschaft and Intel Corporation. The parameters depend on the configuration of the system and on several controllable factors, and may differ from the values imposed in the first phase of initialization. Both phases are executed principally over the COM pins of the VLSI components, through serial loading of the registers in the components.

The physical identification mechanism, with appropriate commands, is controlled by a microcode implemented in the processor modules.

Figure 2 further shows a circuit arrangement for the processing of interrupt and failure signals, in which the interrupt signal line SSM-INTRA and SSM-INTRB and the AC power failure signal line CPFA, CPFB of the two redundant power supply modules PSA and PSB are conduced through a register SC. The respective signal lines of each module, for example CPFA and CPFB, are conduced through an OR element to an input of a register element SE1, which is supplied with the clock signal CLK at one clock input. Further clock pulse delays or synchronizations can be effected with the register elements SE2 and SE3, which are likewise supplied with the clock signal CLK.

As described before init signals issued by the SSMA and SSMB forces a system initialization. Two separate init signals are propagated to each system part. The two signals are interpreted differently for a cold and a warm start according to the following table.

| Init - Input | | System Reaction | |
|---|---|---|---|
| INITA | INITB | Warm-Init | Cold-Init |
| yes | yes | yes | yes |
| yes | no | no | yes |
| no | yes | no | yes |
| no | no | no | no |

This strategy enables high-available systems on the one side to start after a cold start independantly of a single error in one of the SSMs. On the other side a restart after a warm init will only be done if neither SSMA nor SSMB does not show an error.

It will now be understood that there has been disclosed a new computer system with logical monitoring for secure processing of system support signals. As will be evident from the foregoing description, certain aspects of the invention are not limited to the particular details of the examples illustrated, and it is therefore contemplated that other modifications or applications will occur to those skilled in the art. It is accordingly intended that the claims shall cover all such modifications and applications as do not depart from the true spirit and script of the invention.

## Claims

1. A computer system comprising:
a system bus arrangement;
an arrangement of processor modules in a MASTER / CHECKER pair located on said computer card and connected to said system bus arrangement;
a power supply module supplying power to the computer system;
said power supply module arrangement connecting to the computer system through a plurality of interconnecting lines;

logic circuitry connected to said plurality of interconnecting lines for processing a plurality of system support signals transmitted by said power supply arrangement to the computer systems, to insure the integrity of said system support signals; and

a interrupt signal line and/or AC power failure signal line as part of said interconnecting lines.

2. A redundant computer system comprising:

a redundant system bus arrangement of at least two essentially identical system buses;

a redundant arrangement of processor modules in two essentially identical MASTER / CHECKER pairs located on said computer card and connected to said redundant system bus arrangement and said redundant module bus arrangement;

a redundant power supply module arrangement of two essentially identical power supply modules supplying power to the computer system;

said redundant power supply module arrangement connecting to the computer system through a plurality of redundant interconnecting lines;

logic circuitry connected to said plurality of interconnecting lines for processing a plurality of system support signals transmitted by said redundant power supply arrangement to the computer systems, to insure the integrity of said system support signals; and

a redundant interrupt signal line arrangement of two essentially identical interrupt signal lines as part of said redundant interconnecting lines.

3. A redundant computer system in accordance with claim 2 further comprising:

a redundant AC power failure signal line arrangement of two essentially identical AC power failure signal lines as part as said redundant interconnecting lines; and

each said power supply module, including a respective circuit arrangement having a clock input as a part thereof connecting to the respective interrupt signal line and the respective AC power failure signal line, repeats by means of said respective circuit arrangement, the respective system support signals to the computer system upon impressing a clock pulse to said clock input of said circuit arrangement.

4. A redundant computer system in accordance with claim 2 further comprising:

means for producing a redundant INIT signal issued by the system support modules and evaluating the INIT signal in a microprocessor for system operating with one of the operational power supplies.

FIG 1

EP 0 317 827 A2

87 P 7438

FIG 2

EP 0 317 827 A2

87 P 7438

FIG 3

EP 0 317 827 A2

87 P 7438